# EUROPÄISCHE PATENTANMELDUNG

(11) **EP 3 502 616 A1**
(43) Veröffentlichungstag der Anmeldung: **26.06.2019**
(21) Anmeldenummer: 18205059.1
(22) Anmeldetag: 08.11.2018
(51) Int. Cl.: G01B 21/30, G01B 11/00, F03D 80/00

(54) **MARKIERUNGSVORRICHTUNG FÜR EIN TRAGWERK EINES BAUWERKS**

(30) Priorität: 22.12.2017 DE 102017131103
(71) Anmelder: Innogy SE, 45128 Essen (DE)
(72) Erfinder: Rosen, Dr. Johannes, 45481 Mühlheim (DE)
(74) Vertreter: Cohausz & Florack

(57) **Zusammenfassung**

Die vorliegende Erfindung betrifft eine Markierungsvorrichtung für ein Tragwerk eines Bauwerks umfassend, einen motorischen Antrieb, eine eine stirnseitige Kante eines rohrförmigen Tragwerks aufnehmende Führung, an der Führung angeordnete und von dem motorischen Antrieb angetriebene Führungsmittel und Aufbringungsmittel eingerichtet zum Aufbringen von Referenzobjekten auf das Tragwerk.

## Beschreibung

Der Gegenstand betrifft eine Markierungsvorrichtung für ein Tragwerk eines Bauwerks sowie ein System mit einer Markierungsvorrichtung und einer mobilen Bilderfassungsvorrichtung sowie ein Bauwerk.

Häufig werden Tragkonstruktionen bzw. Tragwerke von Bauwerken währen der Montage unter Einsatz hoher Kräfte montiert. Insbesondere bei Pfahlgründungen werden Tagwerke mit hohen Kräften in den Erdboden gerammt. Dies betrifft insbesondere Offshore-Bauwerke, die gegenständlich umfasst sind. Solche können feststehende Bauwerke sein, die in der offenen See vor der Küste errichtet werden. Beispiele für derartige Offshore-Bauwerke sind Windenergieanlagen, Bohrinseln oder Leuchttürme.

Zur Gründung solcher Anlagen bzw. anderer Bauwerke ist es beispielsweise notwendig, das Tragwerk, insbesondere ein rohrförmiges Tragwerk, mittels Ramme in den Boden zu treiben. Hierbei werden Rammenergien von 4000 kJ und mehr pro einzelnen Rammschlag aufgebracht. Nach der Gründung muss das Tragwerk jedoch zur Aufnahme weitergehender Bauteile ausreichend genau hinsichtlich Form und Lage sein. Im Bereich der Windenergieanlagen wird beispielsweise auf eine solche Gründungsstruktur ein sogenanntes "Transition Piece" aufgesetzt.

Zur Aufnahme von solchen Bauteilen ist es notwendig, dass insbesondere die stirnseitige Kante des Tragwerkes, welches zur Aufnahme der weiteren Bauteile eingerichtet ist, den vorgegebenen Toleranzen entspricht. Während der Produktion wird das Tragwerk innerhalb vorgegebener Maßtoleranzen genau hergestellt. Durch Transport und Montage, insbesondere die Gründung mit einer Ramme, kann es jedoch im ungünstigsten Fall zu plastischen Verformungen kommen. Verformungen können zu fehlender Maßhaltigkeit und somit bei einer weitergehenden Montage von Bauteilen auf dem Tragwerk zu Problemen der Passgenauigkeit führen. Gerade im Bereich von Offshore-Anlagen sind Abweichungen außerhalb der Toleranz jedoch nicht gewünscht und führen zu äußerst kostspieligen und unerwünschten Verzögerungen der Montage des Bauwerks.

Weiterhin führen die Rammschläge in Teilen der Stirnfläche unvermeidlich zu oberflächlichen Schädigungen und ggf. teilweise plastischen Deformationen. Eine Messung der Breite dieser oberflächlich erkennbaren Schädigungen in radialer Richtung (entsprechend im Wesentlichen der Kontaktfläche mit der Rammplatte) lässt Rückschlüsse auf die maximal zu erwartende Vorschädigung des gerammten Flansches selbst und des sich darunter anschließenden Teils des Gründungsbauwerks zu.

Abhängig von der Gesamtauslegung können die gerammten Bauteile der Gründungsstruktur vielfach nicht bzw. nur unter nennenswertem zusätzlichen Zeit- und Personalaufwand z.B. per Mannkorb am Kran erreicht werden.

Aus diesem Grunde lag dem Gegenstand die Aufgabe zugrunde, Tragwerke eines Bauwerks in-situ möglichst autonom vermessen zu können.

Zur Lösung dieser Aufgabe wird gegenständlich eine Markierungsvorrichtung nach Anspruch 1 sowie ein System nach Anspruch 9 vorgeschlagen. Außerdem wird ein Bauwerk nach Anspruch 15 vorgeschlagen.

Die Markierungsvorrichtung kann in der Art einer Raupe oder Schnecke gebildet sein und zur Anbringung auf der stirnseitigen Kante des Tragwerks eingerichtet sein. Die Markierungsvorrichtung kann in der Art eines Roboters oder Drohne zur ferngesteuerten oder selbsttägigen Fortbewegung entlang der stirnseitigen Kante des Tragwerks eingerichtet sein. Die Markierungsvorrichtung hat dabei vorzugsweise einen elektromotorischen Antrieb. Der Antrieb kann vorzugsweise mittels eines Energiespeichers, beispielsweise einer Batterie bzw. eines Akkumulators betrieben sein. Die Steuerung der Markierungsvorrichtung kann ferngesteuert oder automatisiert, beispielsweise über einen Mikroprozessor gesteuert, erfolgen. Insbesondere der motorische Antrieb als auch die Aufbringungsmittel können ferngesteuert oder automatisiert oder in einer Kombination von beiden angesteuert werden. Die Markierungsvorrichtung kann programmierbar sein. Auch kann die Markierungsvorrichtung autonom oder teilautonom agieren.

Mittels der Führung kann sich die Markierungsvorrichtung entlang der stirnseitigen Kante des Tragwerks bewegen. Dabei ist es möglich, dass die Führung austauschbar an der Markierungsvorrichtung angeordnet ist. Mit Hilfe eines Austausches der Führung kann insbesondere auf eine unterschiedliche Profilierung des rohrförmigen Tragwerks reagiert werden. Die stirnseitige Kante verschiedener Tragwerke können in einem Schnittprofil, welches parallel zur Längsachse des jeweiligen Tragwerks verläuft, unterschiedliche Querschnitte haben. Auf diese unterschiedlichen Querschnitte kann mit jeweils angepassten Führungen reagiert werden, die an der Markierungsvorrichtung montiert werden können.

Zur Bestimmung, inwieweit das Tragwerk verformt wurde, ist es notwendig, dieses zu vermessen. Um eine Vermessung aus der Ferne vornehmen zu können, wird nun vorgeschlagen, dass mittels Aufbringungsmitteln Referenzobjekte auf das Tragwerk aufgebracht werden. Insbesondere werden die Referenzobjekte (z.B. Reflektoren) auf die stirnseitige Fläche des Tragwerks, insbesondere im Bereich der Kante, aufgebracht.

Das Tragwerk kann vorzugsweise stirnseitig einen nach innen oder nach außen ragenden Kragen bzw. Flansch aufweisen. Über diesen Flansch können weitere Bauteile, beispielsweise das "Transition Piece", mit dem Tragwerk, beispielsweise einem Monopfahl, verschraubt werden. Die Maßhaltigkeit der stirnseitigen Kante, insbesondere des Flansches ist von wesentlicher Bedeutung, um eine Verbindung mit einem weiteren Bauteil, beispielsweise dem "Transition Piece", möglichst ohne Komplikationen herstellen zu können. Insbesondere sind an einem Flansch Bohrlöcher vorgesehen, durch die Bolzen geschoben werden, die dann in korrespondierende Bohrlöcher an dem Bauteil geschoben und dort verschraubt werden.

Eine plastische Verformung der Stirnseite des Tragwerks kann schlimmstenfalls jedoch dazu führen, dass die zueinander korrespondierenden Löcher nicht mehr miteinander fluchten, was die Montage erheblich erschwert oder sogar unmöglich macht. Um im Vorfeld einer Montage eines Bauteils an der stirnseitigen Kante des Tragwerks mögliche Fehlerquellen durch plastische Verformung identifizieren zu können und gegebenenfalls um auf Abweichungen von Sollmaßen durch die plastische Verformung während der Montage reagieren zu können, wird mit Hilfe der aufgebrachten Referenzobjekte ein Vermessen der stirnseitigen Kante des Tragwerks ermöglicht.

Mit Hilfe der Aufbringungsmittel ist es möglich, entlang der stirnseitigen Kante eine Mehrzahl von Referenzobjekten aufzubringen. Werden diese anschließend photographisch erfasst, kann beispielsweise ein interpoliertes 3D-Modell zumindest der Oberfläche der stirnseitigen Kante erstellt werden.

Das erstellte 3D-Modell kann mit Solldaten der Geometrie der stirnseitigen Kante verglichen werden und Abweichungen hieran können festgestellt werden. Hierdurch ist es möglich, bereits vor der Montage des Bauteils an dem Tragwerk, beispielsweise vor der Montage des "Transition Piece" festzustellen, ob die Montage problemlos möglich ist. Eventuelle Abweichungen von Sollgrößen, insbesondere falls beispielsweise Bohrlöcher nicht mehr zueinander fluchten, können dann gegebenenfalls vor der Montage des Bauteils behoben werden oder es kann in einer anderen Weise hierauf reagiert werden.

Auch ist eine Erkennung der Breite der Kontaktfläche möglich. Hierzu kann auf die Aufbringung der Referenzmarken verzichtet werden. Eine automatisierte Bildauswertung mit Kantendetektion von bevorzugt sequentiell erfassten Bilder kann hierzu ausreichend sein und eigenständig erfinderisch sein. Dieses Verfahren lässt sich mit allen hier beschriebenen Verfahren kombinieren. Auf den Bildern kann eine Flanschoberfläche zugeordnet werden. Dies kann per Kompass oder Referenzorientierung erfolgen. Anschließend kann die erfasste Flanschoberfläche automatisch mit voreingestellten Referenzgrenzwerten verglichen werden.

Gemäß einem Ausführungsbeispiel sind die Führungsmittel, die integraler Bestandteil der Führung sein können, derart ausgestaltet, dass sie die stirnseitige Kante insbesondere klemmend zumindest teilweise umgreifen. Somit ist es möglich, die Führung ggf. samt Führungsmittel auf die stirnseitige Kante aufzusetzen. Insbesondere umgreifen die Führung und/oder die Führungsmittel die Kante an zumindest drei Seiten. Der Antrieb kann beispielsweise an der von der Kante ausgehenden Innenfläche und von der Kante ausgehenden Außenflächen des Tragwerks anliegen. Insbesondere kann eine klemmende Befestigung der Führungsmittel an dem Tragwerk vorteilhaft sein. Mit Hilfe der Befestigung der Führungsmittel an dem Tragwerk wird sichergestellt, dass die Markierungsvorrichtung nicht während der Aufbringung der Referenzobjekte an dem Tragwerk verrutscht.

Das Tragwerk, insbesondere die Gründungsstruktur, kann bei Offshore-Bauwerken beispielsweise ein Monopfahl sein, welcher gegenständlich umfasst ist. Bei Windenergieanlagen trägt die Gründungsstruktur den Turm einschließlich Turbine und Rotoren. Bei Bohrinseln trägt die Gründungsstruktur die Plattform einschließlich Aufbauten. Bei Leuchttürmen trägt die Gründungsstruktur den Turm, soweit vorhanden, sowie das Feuer. Die Gründungsstruktur liegt in der Regel unter Wasser, in der Wasserwechselzone, in der Gischtzone sowie gegebenenfalls in der Aerosolzone. Die Gründungsstruktur schließt die Gründungselemente ein, mit denen sie im Meerboden verankert ist.

Gemäß einem Ausführungsbeispiel wird die Markierungsvorrichtung auf der stirnseitigen Kante aufgesetzt und bewegt sich mit Hilfe der Führungsmittel aus eigener Kraft fort. Dabei können die Führungsmittel Rollen, Bänder oder Ketten umfassen, die motorisch angetrieben sind. Zum Fortbewegen liegen die Führungsmittel vorzugsweise zumindest seitlich der stirnseitigen Kante an dem Tragwerk an. Auch ist es möglich, dass die Führungsmittel zumindest teilweise an der Stirnfläche der Kante anliegen.

Gemäß einem vorteilhaften Ausführungsbeispiel sind im Bereich der Führung bzw. der Führungsmittel Positionierungsmittel angeordnet. Mit Hilfe der Positionierungsmittel kann eine optische Referenzmarkierung im Bereich der stirnseitigen Kante detektiert werden. Die Positionierungsmittel können optisch oder mechanisch sein. Insbesondere kann ein Fotosensor zur Erkennung der Referenzmarkierung verwendet werden. Auch andere Ausführungen der Referenzmarkierungen und Positionierungsmittel sind denkbar (z.B. Referenzpunkte und deren Erkennung auf Basis magnetischer und/oder elektrischer Felder).

Es ist möglich, dass auf der stirnseitigen Kante des Tragwerks mindestens eine Referenzmarkierung aufgebracht ist. Diese kann werkseitig aufgebracht sein. Die Referenzmarkierung kann eine Reliefstruktur aufweisen oder auch eine Farbstruktur. Mit Hilfe der Referenzmarkierung ist es möglich, dass sich die Markierungsvorrichtung beim automatischen Fortbewegen entlang der stirnseitigen Kante orientieren kann. Das bedeutet, dass die relative Position der Markierungsvorrichtung auf der stirnseitigen Kante zu der zuvor aufgebrachten Referenzmarkierung eigenständig detektierbar ist. Dies ist insofern relevant, als dann mit Hilfe der Aufbringungsmittel die Markierungsvorrichtung die Referenzobjekte relativ zu der Referenzmarkierung auf der stirnseitigen Kante aufbringen kann. Somit kann die Position der Referenzobjekte relativ zu der Referenzmarkierung genau bestimmt werden.

Während sich die Markierungsvorrichtung entlang der stirnseitigen Kante bewegt, können die Referenzobjekte an definierten Positionen entlang der Bewegungsrichtung der Markierungsvorrichtung aufgebracht werden. Dabei kann der Abstand der Referenzobjekte zueinander, als auch der Abstand der Referenzobjekte zu der Referenzmarkierung, definiert sein.

Auch ist es möglich, dass eine radiale Position der Referenzobjekte bestimmt wird. Die Referenzmarkierung kann sowohl eine Winkelposition als auch eine Radialposition, ausgehend vom Mittelpunkt bzw. von der Längsachse des Tragwerks, referenzieren. Somit kann die Markierungsvorrichtung anhand der Referenzmarkierung einerseits ihre Winkellage entlang der stirnseitigen Kante kennen und andererseits ihren radialen Abstand zum Mittelpunkt bzw. der Längsachse des Tragwerks. Dies erlaubt es, die Referenzobjekte sowohl in ihrer Winkelposition, als auch ihrer Radialposition definiert abzusetzen. Die Referenzmarkierung kann einen sogenannten Nullwinkel referenzieren.

Gemäß einem Ausführungsbeispiel umfasst die Markierungsvorrichtung einen Positionsempfänger (z.B. GPS, Glonass, Galileo), Höhenmesser und/oder einen Kompass. Mit Hilfe des Höhenmessers und/oder des Kompasses können absolute Messwerte zu Höhe und Ausrichtung der Markierungsvorrichtung erfasst und gespeichert werden. Durch Erfassung der Messwerte des Kompasses als auch des Höhenmessers ist es jeweils möglich, die Ausrichtung des Tragwerks zu bestimmen.

Insbesondere können die geodätische Höhe und gegebenenfalls auch eine Bauteilneigung mit Hilfe der durch den Kompass erfassten Messwerte bestimmt werden. Werden an bestimmten Winkelpositionen relativ zu einem Nullwinkel oder abhängig von dem Winkel, der durch den Kompass erfasst wird, Höhenwerte ermittelt, können durch diese Messwerte Ebenen bestimmt werden. Eine Ebene kann beispielsweise mittels einer Best-Fit-Berechnung abhängig von den erfassten Messwerten bestimmt werden. Die Messwerte des Höhenmessers können insbesondere mittels Differential Global Positioning System (DGPS) / Real Time Kinematic (RTK) bestimmt werden. Aus den verschiedenen Messungen entlang des Umfanges der stirnseitigen Kante kann somit eine Ebene ermittelt werden, welche parallel zu der stirnseitigen Kante verläuft. Diese Ermittlung kann mittels einer Best-Fit-Methode erfolgen. So lässt sich die Bauteilneigung als auch die geodätische Höhe der stirnseitigen Kante erfassen.

Auch ist es möglich, dass die von dem Positionsempfänger, dem Höhenmesser und/oder Kompass erfassten Messwerte zusammen mit einer Positionsinformation der Referenzobjekte relativ zu der Referenzmarkierung erfasst werden. So ist es möglich, dass, insbesondere zum Zeitpunkt des Aufbringens der Referenzobjekte, jeweils neben der relativen Position der Markierungsvorrichtung auch der Messwert des Positionsempfänger, des Höhenmessers und/oder der Messwert des Kompasses erfasst wird. Somit kann für ein, vorzugsweise jedes aufgebrachte Referenzobjekt neben dessen Relativposition auch der Messwert des Positionsempfänger, des Kompasses und/oder des Höhenmeters erfasst werden.

Für eine anschließende photogrammetrische Bestimmung von Rundheit, Ebenheit und/oder Neigung der stirnseitigen Kante, insbesondere eines Flansches an der stirnseitigen Kante, wird vorgeschlagen, eine Referenzskala vorzuhalten, die auf dem Tragwerk aufgebracht sein kann oder durch die Markierungsvorrichtung bereitgestellt werden kann.. Mit Hilfe der Referenzskala kann ein Maßstab einer photographischen Aufnahme der Referenzobjekte bestimmt werden, so dass anschließend quantitativ Rundheit, Ebenheit und/oder Neigung und/oder sonstige geometrische Parameter der stirnseitigen Kante, insbesondere auch des Flansches, bestimmt werden können. Mit Hilfe der Aufbringungsmittel kann eine Referenzskala auf dem Tragwerk aufgebracht werden.

Wie bereits erläutert, kann die Markierungsvorrichtung ferngesteuert sein. Aus diesem Grunde wird vorgeschlagen, dass die Markierungsvorrichtung eine Kommunikationseinrichtung zum Empfangen zumindest von Steuerungssignalen aufweist. Mit Hilfe der Steuerungssignale ist es möglich, die Positionierung der Markierungsvorrichtung auf der stirnseitigen Kante vorzugeben. Insbesondere eine Relativposition zu einer Referenzmarkierung kann dabei vorgegeben und angefahren werden.

Auch ist es möglich, die Position der Markierungsvorrichtung, insbesondere die absolute Position der Markierungsvorrichtung, und/oder die relative Position der Markierungsvorrichtung relativ zu der Referenzmarkierung mittels der Kommunikationseinrichtung zu versenden. Diese Übertragung kann insbesondere in Echtzeit erfolgen. Das heißt, dass während des Aufbringens der Referenzobjekte in Echtzeit auch die jeweiligen Positionsinformationen (absolut und/oder relativ) übertragen werden können. Diese Echtzeitübertragung der Positionsdaten, insbesondere der geografischen Koordinaten und/oder der relativen Position ermöglicht es, eine Messkamera auf einer Inspektionsplattform, insbesondere einer Drohne, in Echtzeit anzusteuern und deren Position relativ zu dem Tragwerk zu bestimmen. Dies ermöglicht es, eine kleine Anzahl an Aufnahmepunkten zu bestimmen, an denen die Inspektionseinrichtung, insbesondere eine Messkamera Aufnahmen der stirnseitigen Kante erfasst.

Auch ist es möglich, dass eine Referenzskala auf der Markierungsvorrichtung selbst aufgebracht ist. Wenn die Markierungsvorrichtung auf der stirnseitigen Kante aufgebracht ist, ist die relative Position der Referenzskala zu der tatsächlichen Kante, zu Bohrlöchern oder anderen sichtbaren Merkmalen anhand der Größe der Markierungsvorrichtung bekannt. Verbleibt die Markierungsvorrichtung auf der stirnseitigen Kante während der Aufnahme durch die Inspektionsplattform, kann die Referenzskala auf der Markierungsvorrichtung genutzt werden, um quantitative Aussagen zu den geometrischen Parametern des Tragwerks zu bestimmen. Die Referenzskala ist insbesondere ein Maßstab, der in den photogrammetrischen Aufnahmen der Inspektionsplattform sichtbar ist. Mit Hilfe der Skala ist eine Bemaßung der bei der Aufnahme ermittelten Abstände der Referenzobjekte zueinander und/oder eine Bemaßung der stirnseitigen Kante möglich. Insbesondere mittels einer Bündelausgleichung können die relativen Abstände der Referenzobjekte zueinander bemaßt werden. Auch können die Abstände der Bohrungen in dem Flansch, die Größe der Bohrungen, die axiale und/oder radiale Position der Bohrungen und/oder weitere Kennzahlen der Bohrungen / des Bohrlochbildes, insbesondere eine eventuelle Ovalisierung, bestimmt werden.

Unter anderem wegen der im installierten Zustand zu erwartenden Bewegungen der Gründungsstruktur z.B. durch Wellenanschlag, ist die Photogrammmetrie das bevorzugte Vermessungsverfahren. Hierbei werden mittels einer Kamera die auf dem Tragwerk aufgebrachten, codierten Referenzobjekte vorzugsweise aus zumindest drei Perspektiven aufgenommen. Mit Hilfe einer Bündelausgleichung werden die erfassten Referenzobjekte zueinander in eine räumliche Relation gebracht. Durch die Markierungsvorrichtung ist eine üblicherweise manuelle Bestückung des Tragwerks nicht mehr notwendig. Insbesondere bei Offshore-Anlagen kann aus Gründen des Arbeitsschutzes eine manuelle Bestückung nahezu unmöglich sein oder einen zeitlich und finanziell inakzeptablen Zusatzaufwand bedeuten. Durch die automatische Bestückung mit Referenzobjekten kann zeitsparend und ohne Gefährdung von Personen eine photogrammetrische Überprüfung der erforderlichen Bauteiltoleranzen im installierten Zustand durchgeführt werden. Das gegenständliche System umfasst neben einer Markierungsvorrichtung eine mobile Bilderfassungsvorrichtung. Die Markierungsvorrichtung und die mobile Bilderfassungsvorrichtung sind drahtlos miteinander in Kommunikation.

Die Bilderfassungsvorrichtung ist vorzugsweise eine geeichte Vermessungskamera. Die Bilderfassungsvorrichtung ist dazu eingerichtet, die Referenzskala, insbesondere eine auf der Markierungsvorrichtung aufgebrachte Referenzskala oder eine an der stirnseitigen Kante des Tragwerks aufgebrachte Referenzskala zu erfassen und mittels geeigneter Bildauswertungssoftware hieraus quantitative Werte zu relativen Abständen von Referenzobjekten zu bestimmen.

Für die Ausrichtung der Bilderfassungsvorrichtung relativ zu dem Tragwerk ist es sinnvoll, wenn die Bilderfassungsvorrichtung zumindest Messwerte des Positionsempfängers, des Kompasses und/oder des Höhenmessers empfängt. Auch eine Relativposition der Markierungsvorrichtung zu der Referenzmarkierung, insbesondere zum Zeitpunkt des Aufbringens von Referenzobjekten, kann ebenfalls empfangen werden. Durch die Kenntnis der Messwerte von Positionsempfänger, Höhenmesser und/oder Kompass und/oder der relativen Position der Markierungsvorrichtung zu der Referenzmarkierung bzw. der Referenzobjekte zu der Referenzmarkierung, kann die Bilderfassungsvorrichtung automatisiert relativ zu dem Tragwerk ausgerichtet werden (radial und horizontal). Dadurch ist es möglich, mit einer geringen Anzahl an Messungen, insbesondere einer geringen Anzahl an Aufnahmen, das Tragwerk ausreichend genau aufzunehmen und anschließend auszumessen. Der Aufsichtswinkel auf das Tragwerk ist vorzugsweise in einem Winkel von 45° zu der Längsachse des Tragwerks.

Gemäß einem Ausführungsbeispiel wird vorgeschlagen, dass die Bilderfassungsvorrichtung zumindest die Referenzskala erfasst, so dass zumindest abhängig von der Referenzskala und den erfassten Referenzobjekten quantitative Maße des Tragwerks bestimmbar sind. Anhand der Referenzskala kann eine Bemaßung der relativen Abstände der Referenzobjekte zueinander erfolgen. Hierdurch kann auch das Tragwerk selbst bemaßt werden. Auch können die Abstände der Bohrungen in dem Flansch, die Größe der Bohrungen, die axiale und/oder radiale Position der Bohrungen und/oder weitere Kennzahlen der Bohrungen (z.B. Rundheit des Bohrlochkreises) bestimmt und mit den Fertigungsmessungen bzw. den geforderten Toleranzgrenzen abgeglichen werden. Abhängig von der Anzahl der Referenzobjekte kann somit eine mehr oder minder genaue geometrische Vermessung des Tragwerks, insbesondere der stirnseitigen Kante des Tragwerks erfolgen.

Auch wird vorgeschlagen, dass die Bilderfassungsvorrichtung zumindest zwei Bilder der Referenzobjekte auf dem Tragwerk erfasst, so dass mittels Bündelausgleich Objektkoordinaten der Referenzobjekte ermittelbar sind. Die Objektkoordinaten können insbesondere Informationen zu der Relativposition der Referenzobjekte zueinander enthalten. Durch Bündelausgleich ist es möglich, ein 3D-Modell der Referenzobjekte zu erstellen. In Kenntnis der relativen Position der Referenzobjekte auf dem Tragwerk kann somit auch eine geometrische Auswertung des Tragwerks erfolgen. Die Positionierung der Bilderfassungsvorrichtung relativ zur Markierungsvorrichtung kann abhängig von Informationen zu den Referenzobjekten bzw. deren Relativposition auf dem Tragwerk erfolgen.

Die Bilderfassungsvorrichtung kann auf einer Inspektionsplattform, insbesondere einer mobilen Drohne, angeordnet sein. Auch ist es möglich, dass die Markierungsvorrichtung mit Hilfe einer mobilen Drohne transportierbar ist. Somit kann die Markierungsvorrichtung an der mobilen Drohne lösbar befestigt werden, zum Tragwerk bewegt werden, und dort abschließend abgesetzt werden. Auch kann die Drohne die Markierungsvorrichtung von dem Tragwerk wieder aufnehmen, nachdem die Referenzobjekte aufgebracht wurden.

Die Markierungsvorrichtung kann auch eine Reinigungseinrichtung aufweisen. Mit Hilfe der Reinigungseinrichtung ist es möglich, eventuelle Verschmutzungen, beispielsweise Partikel, Staub, ölhaltige Rückstände, etc. auf dem Tragwerk vor dem Aufbringen der Referenzobjekte zu entfernen. Dies verbessert die Haftung der Referenzobjekte auf dem Tragwerk.

Auch ist es möglich, dass mit Hilfe der Markierungsvorrichtung Adapter zur Aufnahme der Referenzobjekte aufgebracht werden. Insbesondere können die Adapter und/oder die Referenzobjekte magnetisch haftend auf dem Tragwerk aufgebracht werden.

Auch wird vorgeschlagen, dass die Markierungsvorrichtung zum Entfernen der Referenzobjekte eingerichtet ist. Hierzu kann eine Abnahmeeinrichtung eingerichtet sein, die nach erfolgter Aufnahme der Referenzobjekte durch die Bilderfassungsvorrichtung, wie beschrieben, die Referenzobjekte und beispielsweise auch die Referenzskala wieder entfernt.

Wie bereits erläutert, stehen die Markierungsvorrichtung und die Bilderfassungsvorrichtung in Kommunikation miteinander. Dabei kann die Markierungsvorrichtung ihre relative Position auf dem Tragwerk an die Bilderfassungsvorrichtung übertragen. Ist die Bilderfassungsvorrichtung Teil einer mobilen Drohne, kann die mobile Drohne abhängig von der Position der Markierungsvorrichtung auf dem Tragwerk ausgerichtet werden. Ferner kann es möglich sein, dass die Bilderfassungsvorrichtung abhängig von der Position der Markierungsvorrichtung auf dem Tragwerk Bilder des Tragwerks erfasst.

Ein weiterer Aspekt ist ein Bauwerk nach Anspruch 15. Dieses Bauwerk zeichnet sich dadurch aus, dass es ein sich in seiner Längsachse erstreckendes, rohrförmiges Tragwerk aufweist. An dem Tragelement kann an seinem stirnseitigen Ende ein Anschlussflansch für eine kraft- und/oder formschlüssige Verbindung mit einem an dem Tragwerk zu befestigenden Bauelement vorgesehen sein. Insbesondere kann das Bauwerk Teil einer (Onshore- oder Offshore-) Windenergieanlage sein. Das Tragwerk kann dabei insbesondere ein Gründungspfahl, insbesondere ein Monopfahl sein. Das daran zu befestigende Bauelement kann beispielsweise ein Transition Piece oder ein Turmsegment sein.

Auf dem Anschlussflansch kann eine Referenzmarkierung vorgesehen sein. Die Referenzmarkierung kann einerseits eine Winkelposition auf dem stirnseitigen Flansch definieren. Auch kann eine Referenzmarkierung eine Radialposition definieren. Auch ist es möglich, dass auf dem Anschlussflansch nach der Montage des Tragelements photogrammetrisch erfassbare Referenzobjekte aufgebracht sind.

Für eine photogrammetrische Auswertung ist es vorteilhaft, wenn zumindest zwei Referenzobjekte, vorzugsweise drei Referenzobjekte auf dem Flansch aufgebracht sind. Insbesondere können die Referenzobjekte in gleichen Winkelabständen zueinander aufgebracht sein. Durch eine Best-Fit-Methode lässt sich eine die Referenzobjekte umfassende Ebene bestimmen. Diese Ebene bestimmt die Ausrichtung des Flansches im Raum. Dadurch kann die Höhe als auch beispielsweise die Schrägstellung des Flansches im Raum photogrammetrisch bestimmt werden.

Das Tragwerk ist in seinem Abschluss rohrförmig, insbesondere zylinderförmig.

Der Anschlussflansch ist vorzugsweise radial nach innen weisend an dem Tragwerk angeordnet. Ferner kann der Anschlussflansch sich in seiner Materialstärke radial nach innen verjüngen. Entlang des Anschlussflansches können Bohrungen vorgesehen sein, die bei der Montage möglichst konzentrisch mit Bohrungen des anzuschließenden Bauelementes, insbesondere des Transition Pieces, sein müssen. Aus diesem Grunde ist es notwendig, die Positionierung der Bohrungen zueinander zu kennen, weshalb gegenständlich die photogrammetrische Auswertung der Ovalität des Tragwerks vorgeschlagen ist.

Die Referenzobjekte sind bevorzugt Reflektoren. Diese sind vorzugsweise haftend, insbesondere rückstandsfrei entfernbar an dem Anschlussflansch angeordnet. Insbesondere eine magnetische Befestigung an dem Anschlussflansch ist bevorzugt.

Ferner kann an dem Anschlussflansch eine Referenzmarkierung für eine Markierungsvorrichtung nach Anspruch 1 vorgesehen sein.

Wie bereits erläutert, ist es bevorzugt, wenn das Bauwerk eine Gründungsstruktur für Offshore-Anlagen ist. Insbesondere kann dies eine Gründungsstruktur für Windkraftanlagen sein. Dabei kann die Gründungsstruktur insbesondere ein Monopfahl sein. Das daran anzuordnende Bauelement kann beispielsweise ein Transition Piece oder Turmsegment einer Windkraftanlage sein.

Nachfolgend wird der Gegenstand anhand einer Ausführungsbeispiele zeigenden Zeichnung näher erläutert. In der Zeichnung zeigen:
- Fig. 1: eine Offshore-Windkraftanlage als Beispiel eines Bauwerks;
- Fig. 2a): eine Schnittansicht eines Monopfahls;
- Fig. 2b): eine Draufsicht eines Monopfahls;
- Fig. 3a)-d): verschiedene Ausgestaltungen von Markierungsvorrichtung;
- Fig. 4a)-f): verschiedene Ausgestaltungen von Referenzobjekten;
- Fig. 5: ein Referenzobjekt mit einem Adapter;
- Fig. 6: eine Markierungsvorrichtung mit einer Drohne;
- Fig. 7: eine Anordnung zur Erfassung von Aufnahmen der Referenzobjekte an einem Monopfahl.

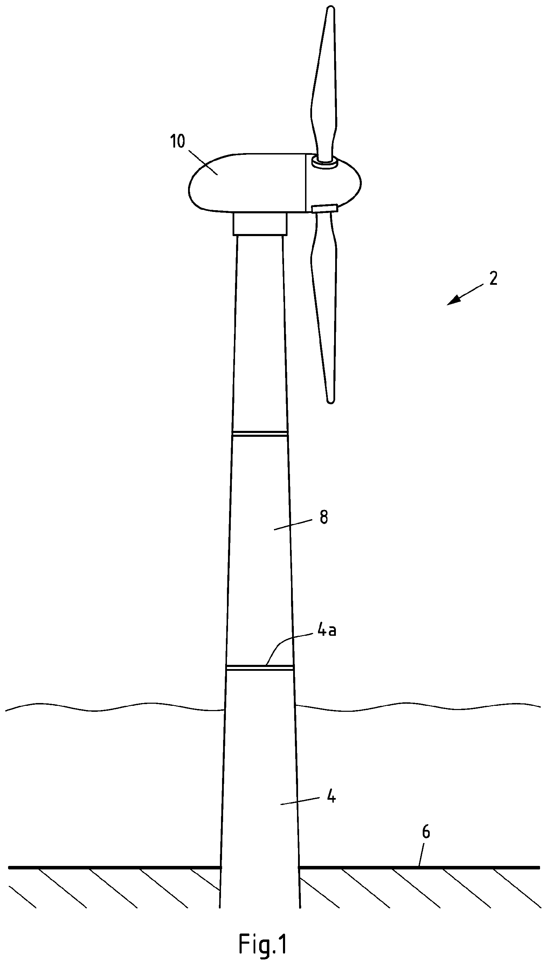

Fig. 1 zeigt eine Windkraftanlage (Windenergieanlage) 2, welche als Offshore-Anlage gebildet ist. Die Windkraftanlage 2 ist mit einer Gründungsstruktur 4 in der Form eines Tragwerks im Meerboden 6 gegründet. Hierbei wird mittels einer Ramme die stirnseitige Kante 4a der Gründungsstruktur 4 in den Meerboden 6 gerammt. Bei diesem Vorgang treten enorme Kräfte an der stirnseitigen Kante 4a auf. Die Gründung kann mit Schlagenergieimpulsen von bis zu 4000 kJ und mehr erfolgen. Da die Gründungsstruktur 4 in der Regel rohrförmig ist, kann es zu Verformungen kommen. Solche Verformungen sind jedoch unerwünscht, da nach der Gründung ein Transition Piece 8 mit der Gründungsstruktur 4 verschraubt wird. Hierzu wird im Inneren der Gründungsstruktur 4 entlang eines Flansches eine Verschraubung mit Bolzen mit dem Transition Piece 8 durchgeführt. Für diese Verschraubung ist es notwendig, dass die Bohrungen in dem Flansch des Transition Pieces 8 mit den Bohrungen in dem Flansch der Gründungsstruktur 4 fluchten. Durch die wirkenden Kräfte bei unsachgemäßem Transport sowie den enormen Kräfte bei der Gründung kann es jedoch schlimmstenfalls zu Verformungen kommen, durch die die Passgenauigkeit unzulässig beeinträchtigt wird.

Anhand der Breite des Abdrucks der Rammplatte auf dem Flansch kann außerdem auf eventuelle Überbeanspruchungen des Flansches während des Rammvorgangs rückgeschlossen werden. Eine Auswertung der Abdruckbreite auf dem Flansch kann somit zur nachträglichen Kontrolle des Rammvorgangs und der daraus resultierenden Rammschädigungen (keine Überschreitung lokal zulässiger Spitzenspannungen) dienen.

Der Vollständigkeit halber ist in Fig. 1 noch die Gondel 10 gezeigt, die die Windkraftanlage 2 umfasst.

Um die Montage des Transition Pieces 8 auf der Gründungsstruktur 4 zu erleichtern, ist eine Kenntnis der relativen Position der Bohrungen zueinander und/oder zu einer Referenzmarkierung im Bereich der stirnseitigen Kante 4a der Gründungsstruktur 4 gewünscht. Insbesondere kann dann gegebenenfalls vor der Montage an dem Transition Piece 8 oder einem Turmsegment eine manuelle Anpassung an gegebenenfalls erzeugte Abweichungen von Soll-Maßen im Bereich der stirnseitigen Kante 4a erfolgen.

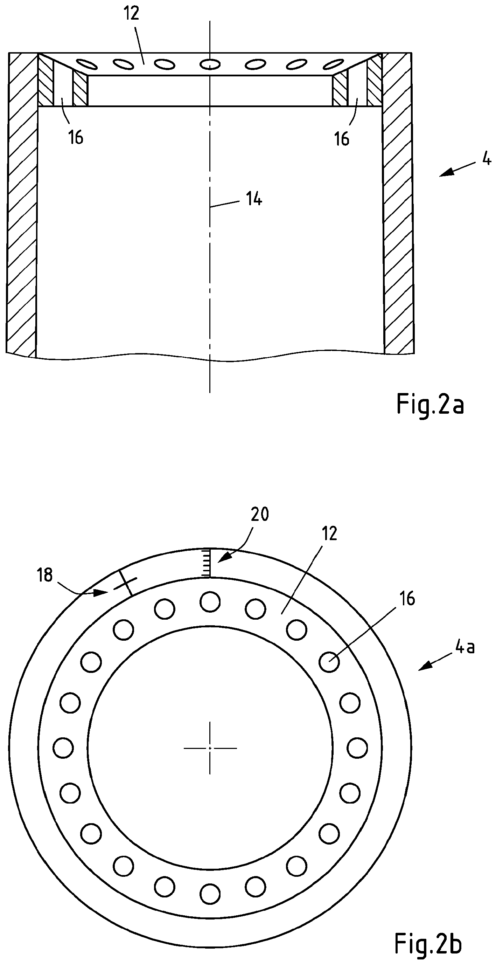

Eine stirnseitige Kante 4a eines Tragwerks 4 ist in der Fig. 2a) gezeigt. Im Bereich der stirnseitigen Kante 4a ist ein nach innen weisender Flansch 12, welcher sich in Richtung der Längsachse 14 verjüngt. Der Flansch weist Bohrungen 16 auf. Beispielsweise können bei einem Monopfahl einer Windkraftanlage 2 mehr als 100 vorzugsweise äquidistant zueinander angeordnete Bohrungen 16 vorgesehen sein. Durch die auf die stirnseitige Kante 4a wirkenden äußeren Kräfte bei der Gründung kann die Gründungsstruktur 4 verformt werden. Insbesondere die stirnseitige Kante 4a kann sich dabei plastisch verformen. Diese Verformung kann schlimmstenfalls dazu führen, dass das Transition Piece 8 nicht mehr bündig mit dem Flansch 2 montiert werden kann. Insbesondere kann es dazu kommen, dass Bohrungen in dem Transition Piece 8 mit den Bohrungen 16 nicht mehr fluchten. Um dies frühzeitig erkennen zu können, wird die stirnseitige Kante 4a gegenständlich automatisch vermessen.

Fig. 2b) zeigt eine Draufsicht auf eine stirnseitige Kante 4a mit dem Flansch 12 und den Bohrungen 16. Zu erkennen ist, dass auf der stirnseitigen Kante beispielsweise eine Referenzmarkierung 18 aufgebracht sein kann. Die Referenzmarkierung 18 kann an einer bestimmten Winkelposition, insbesondere relativ zu den Bohrungen 16 aufgebracht sein. Auch kann die Referenzmarkierung eine Radialposition definieren. Die Radialposition kann auch relativ zu den Bohrungen bestimmt sein.

Anhand der Referenzmarkierung 18 kann sich eine Markierungsvorrichtung 22 entlang der stirnseitigen Kante 4a bewegen und seine relative Position zu der Referenzmarkierung 18 kennen.

Auf der stirnseitigen Kante 4a kann darüber hinaus eine Referenzskala 20 aufgebracht werden (z.B. in Form eines Maßstabs mit definierter Länge). Die Referenzskala 20 ermöglicht es, in einer photographischen Aufnahme der stirnseitigen Kante 4a nicht nur qualitativ, sondern auch quantitativ Größenordnungen bestimmen zu können. Die Referenzskala 20 kann vorgefertigt auf der stirnseitigen Kante 4a aufgebracht sein oder mittels einer Markierungsvorrichtung 22 aufgebracht werden.

Sowohl die Referenzmarkierung 18 als auch die Referenzskala 20 kann in einer Reliefstruktur auf der stirnseitigen Kante 4a aufgebracht sein. Denkbar sind auch Aufkleber, Lasermarkierungen o.ä.

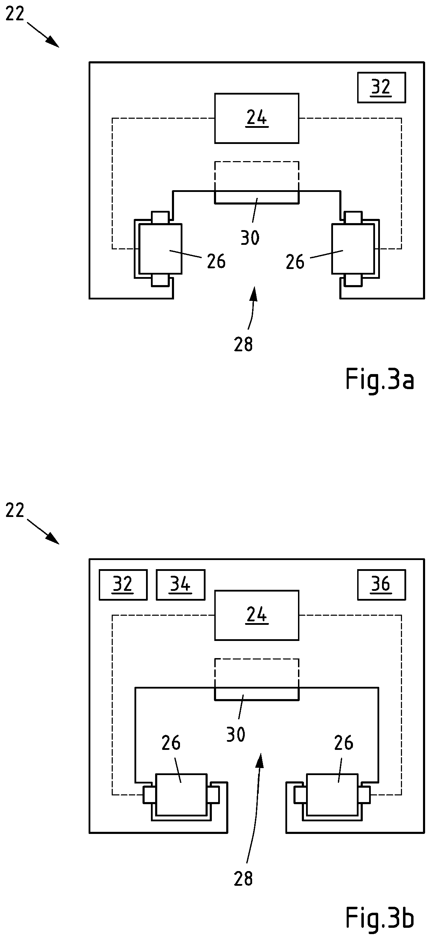

Fig. 3a) zeigt ein erstes Ausführungsbeispiel einer Markierungsvorrichtung 22. Die Markierungsvorrichtung 22 weist einen Antrieb 24 auf, der motorisch sein kann. Der Antrieb 24 treibt Führungsmittel 26 an. Die Führungsmittel 26 können beispielsweise Rollen oder Bänder sein. Die Führungsmittel 26 können in einer Führung 28 angeordnet sein. Insbesondere können die Führungsmittel 26 an einander gegenüberliegenden Wänden der Führung 28 vorgesehen sein. Die Führung 28 ist auf die stirnseitige Kante 4a aufgesetzt. Die an der Stirnseite anliegende Innenfläche der Markierungsvorrichtung 22 kann Aufbringungsmittel 30 aufweisen. Die Aufbringungsmittel 30 eignen sich zum Aufbringen von Referenzobjekten. Die Markierungsvorrichtung 22 umfasst einen nicht dargestellten Prozessor sowie eine Kommunikationseinrichtung 32.

Die in Fig. 3a) gezeigte Führung 28 ist U-förmig. Sie kann jedoch, wie in der Fig. 3b) gezeigt, auch C-förmig sein. Insbesondere ist die lichte Öffnung der Führung 28 kongruent zu dem Querschnittsprofil des Flansches 12 samt Kante 4a. Somit umgreift die Führung 28 die stirnseitige Kante 4a.

In der Fig. 3b) sind die Führungsmittel 26 an der den Aufbringungsmitteln 30 gegenüberliegenden Innenwand der Führung 28.

Neben der Kommunikationseinrichtung 32 kann ein, vorzugsweise (D)GPS-basierter Positions- und Höhenmesser 34 als auch ein Kompass 36 mit dem Prozessor verbunden sein. Mittels einer Speichereinheit können die Messergebnisse erfasst werden.

Auch ist es möglich, über die Führungsmittel 26 die durch die Markierungsvorrichtung 22 zurückgelegte Strecke zu erfassen. Hierdurch kann insbesondere relativ zu der Referenzmarkierung 18 eine Entfernung quantitativ bestimmt werden.

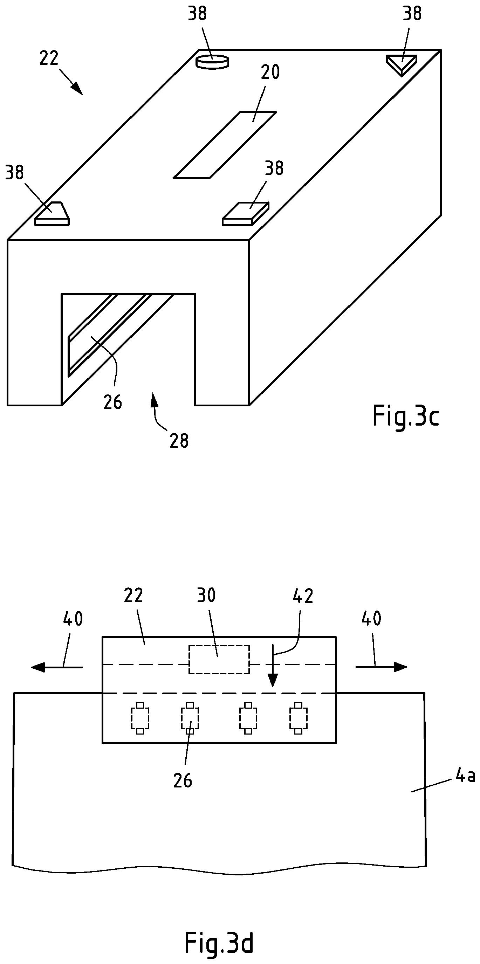

Fig. 3c) zeigt eine Ansicht einer Markierungsvorrichtung 22. Zu erkennen ist, dass die Führungsmittel 26 in diesem Ausführungsbeispiel als Transportband gebildet sind. Die Führung 28 erstreckt sich in Längsrichtung entlang der Markierungsvorrichtung 22. Auf der Oberseite der Markierungsvorrichtung 22 kann eine Referenzskala 20 angeordnet sein.

Darüber hinaus kann die Markierungsvorrichtung 22 Anschlusskonsolen 38 aufweisen. Die Anschlusskonsolen 38 sind vorzugsweise auf der Oberseite der Markierungsvorrichtung 22 angeordnet. Mit Hilfe der Anschlusskonsolen 38 ist es möglich, die Markierungsvorrichtung 22 kraftschlüssig - insbesondere magnetisch - und / oder formschlüssig mit einer mobilen Plattform, beispielsweise einer Drohne, zu verbinden. Hierdurch kann die Markierungsvorrichtung 22 ferngesteuert beispielsweise auf einen Monopfahl einer Gründungsstruktur 4 abgesetzt werden und anschließend Referenzobjekte anbringen.

Fig. 3d) zeigt die Markierungsvorrichtung 22 in einer Seitenansicht. Hier sind nebeneinander angeordnete Rollen als Führungsmittel 26 vorgesehen. Entlang der Bewegungsrichtung 40 bewegt sich die Markierungsvorrichtung 22 über die stirnseitige Kante 4a. Die Wegstrecke entlang der Bewegungsrichtung 40 kann dabei erfasst werden.

Die Aufbringungsmittel 30 bringen in Richtung 42 die Referenzobjekte 44 auf die stirnseitige Kante 4a auf.

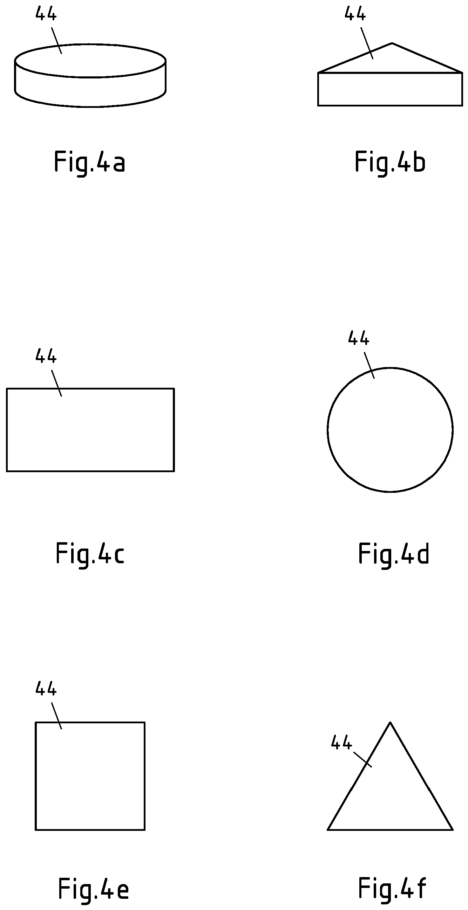

Die Figuren 4a9-f) zeigen unterschiedliche Referenzobjekte 44.

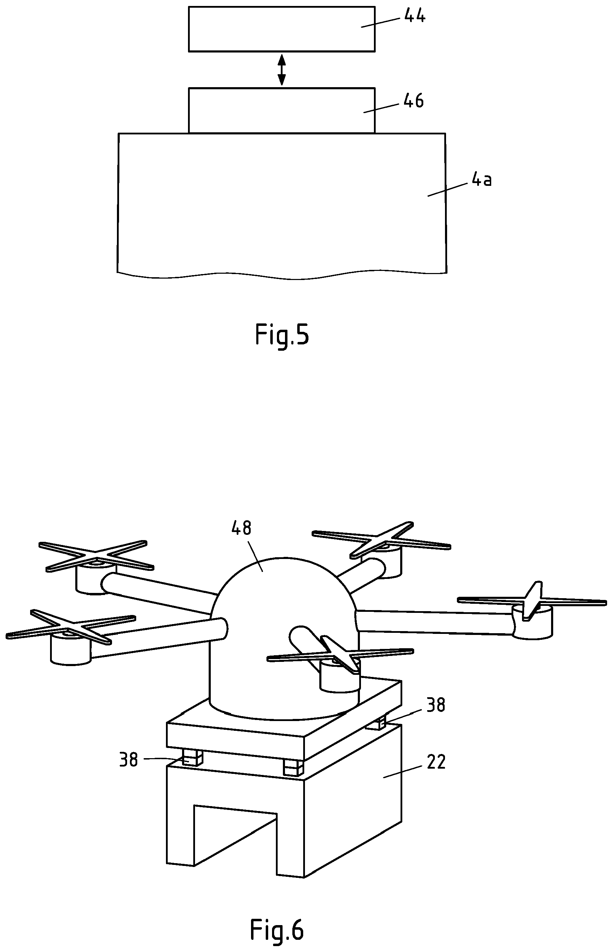

In den Figuren 4a) und b) können die Referenzobjekte 44 beispielsweise magnetisch sein und wie dies in Fig. 5 gezeigt ist. Mit einem Anschlussadapter 46 können diese auf die stirnseitige Kante 4a aufgesetzt werden. Hierbei kann beispielsweise eine magnetische Befestigung zwischen dem Adapter 46 und dem Referenzobjekt 44 erfolgen.

Wie in den Figuren 4a) und b) zu erkennen ist, sind die Referenzobjekte 44 beispielsweise in ihrer Außenkontur oder mittels geometrischer Muster auf der Oberfläche kodiert. Das bedeutet, dass jedes einzelne Referenzobjekt 44 beispielsweise eine eigene Form haben kann, so dass jedes der Referenzobjekte 44, welches auf der Gründungsstruktur 44 aufgebracht wird, anhand seiner Form eindeutig identifiziert werden kann.

Figuren 4c) bis f) zeigen Referenzobjekte 44 in unterschiedlichen Formen. Die Referenzobjekte 44 sind hierbei beispielsweise Reflektoren, welche in der Form von Aufklebern auf die Kante 4a aufgeklebt werden können.

Fig. 6 zeigt, wie eine Drohne 48 die Markierungsvorrichtung 22 an den Konsolen 38 aufnehmen kann und somit die Markierungsvorrichtung 22 beispielsweise ferngesteuert oder (teil-)autonom auf einer Gründungsstruktur 4 absetzen kann.

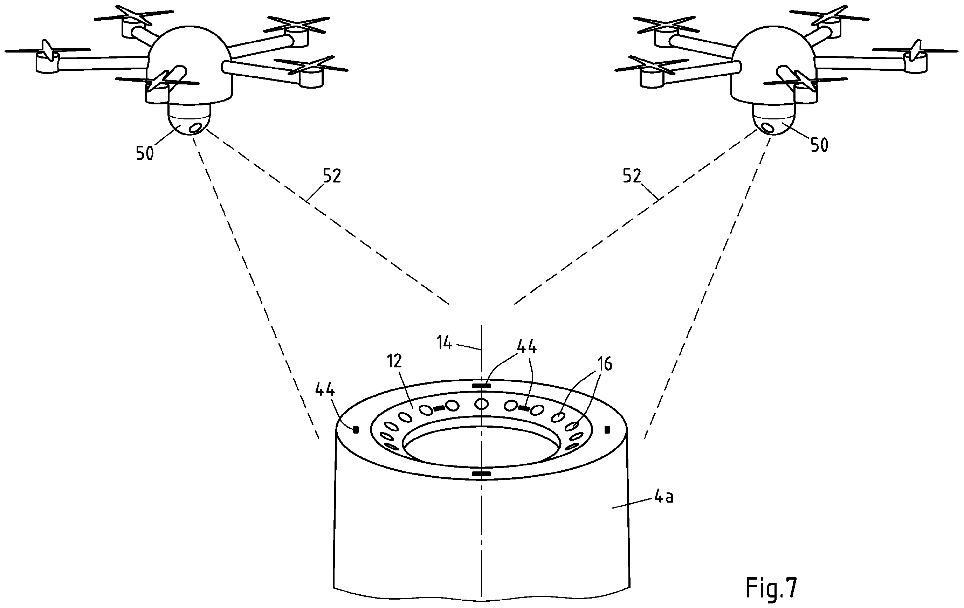

Fig. 7 zeigt eine Ansicht einer stirnseitigen Kante 4a mit Bohrungen 16 im Bereich des Flansches 12. Ferner ist zu erkennen, dass auf der stirnseitigen Kante 4a und im Bereich des Flansches 12 Referenzobjekte 44 aufgebracht sind. Die Referenzobjekte 44 wurden in der zuvor beschriebenen Art und Weise durch die Markierungsvorrichtung 22 aufgebracht. Nach dem Aufbringen der Referenzobjekte 44 kann mit Hilfe von einer Bilderfassungsvorrichtung 50 zumindest ein Bild, vorzugsweise mehrere Bilder der stirnseitigen Kante 4a erfasst werden. Hierbei wird die Bilderfassungsvorrichtung 50 in der Art einer mobilen Drohne relativ zu der Gründungsstruktur 4 positioniert. Insbesondere kann eine Positionierung zur Längsachse 14 derart erfolgen, dass die Blickrichtung 52 in etwa einen Winkel von 45° zu der Längsachse 14 hat.

In Kenntnis der Position der Referenzobjekte 44 und unter Verwendung verschiedener Aufnahmen der Bilderfassungsvorrichtung 50 ist es einerseits möglich, die relative Positionierung der Referenzobjekte 44 zueinander zu erfassen. Unter Verwendung der Referenzskala 20 können auch die absoluten Abstände der Referenzobjekte 44 zueinander bestimmt werden. Hierdurch lässt sich die Maßhaltigkeit der stirnseitigen Kante 4a der Gründungsstruktur 4 photogrammetrisch vermessen. Durch geeignete Positionierung der Referenzobjekte und photogrammetrische Auswerteverfahren ist es anhand der Referenzobjekte möglich, die Ovalität der Gründungsstruktur 4 im Bereich der stirnseitigen Kante 4a zu vermessen.

### Bezugszeichenliste

- 2: Windkraftanlage
- 4: Gründungsstruktur
- 4a: Kante
- 6: Meeresboden
- 8: Transition Piece
- 10: Gondel
- 12: Flansch
- 14: Längsachse
- 16: Bohrung
- 18: Referenzmarkierung
- 20: Referenzskala
- 22: Markierungsvorrichtung
- 24: Antrieb
- 26: Führungsmittel
- 28: Führung
- 30: Aufbringungsmittel
- 32: Kommunikationseinrichtung
- 34: Höhenmesser
- 36: Kompass
- 38: Konsole
- 40: Bewegungsrichtung
- 42: Aufbringrichtung
- 44: Referenzobjekt
- 46: Adapter
- 48: Drohne
- 50: Bilderfassungsvorrichtung
- 52: Blickwinkel

## Patentansprüche

1. Markierungsvorrichtung für ein Tragwerk eines Bauwerks umfassend,
- einen motorischen Antrieb,
- eine eine stirnseitige Kante eines rohrförmigen Tragwerks aufnehmende Führung,
- an der Führung angeordnete, von dem motorischen Antrieb angetriebene Führungsmittel und
- Aufbringungsmittel eingerichtet zum Aufbringen von Referenzobjekten auf das Tragwerk.

2. Markierungsvorrichtung nach Anspruch 1,
**dadurch gekennzeichnet,**
- **dass** die Führungsmittel die stirnseitige Kante insbesondere klemmend zumindest teilweise umgreifen und/oder dass die Führungsmittel die stirnseitige Kante U-förmig oder C-förmig zumindest teilweise umgreifen.

3. Markierungsvorrichtung nach Anspruch 1 oder 2,
**dadurch gekennzeichnet,**
- **dass** die Führungsmittel Rollen, Bänder oder Ketten sind und/oder dass die Führungsmittel zumindest seitlich der stirnseitigen Kante an dem Tragwerk anliegen und/oder dass die Führungsmittel zumindest an der Stirnfläche der Kante anliegen.

4. Markierungsvorrichtung nach einem der vorangehenden Ansprüche,
**dadurch gekennzeichnet,**
- **dass** Positionierungsmittel im Bereich der Führungsmittel angeordnet sind, derart, dass die Positionierungsmittel eine optische Referenzmarkierung im Bereich der stirnseitigen Kante detektieren.

5. Markierungsvorrichtung nach einem der vorangehenden Ansprüche,
**dadurch gekennzeichnet,**
- **dass** ein Positions- und/oder Höhenmesser und/oder ein Kompass vorgesehen sind, und dass die von dem Höhenmesser und/oder Kompass erfassten Messwerte gespeichert werden, insbesondere dass die von dem Höhenmesser und/oder Kompass erfassten Messwerte relativ zu der Referenzmarkierung erfasst werden und/oder dass die von dem Höhenmesser und/oder Kompass erfassten Messwerte zusammen mit einer Positionsinformation der Referenzobjekte relativ zu der Referenzmarkierung erfasst werden.

6. Markierungsvorrichtung nach einem der vorangehenden Ansprüche,
**dadurch gekennzeichnet,**
- **dass** die Aufbringmittel zum Aufbringen der Referenzobjekte abhängig von einer relativen Entfernung zu der Referenzmarkierung auf das Tragwerk eingerichtet ist und/oder dass die Aufbringmittel zum Aufbringen der Referenzobjekte in gleichen Abständen zueinander, insbesondere in gleichen Winkelabständen zueinander auf das Tragwerk eingerichtet ist und/oder dass die Referenzobjekte permanentmagnetisch sind und / oder dass die Referenzobjekte zentrisch in die im Flansch vorhandenen Bohrlöcher eingebracht werden können und/oder dass die Referenzobjekte codiert sind.

7. Markierungsvorrichtung nach einem der vorangehenden Ansprüche,
**dadurch gekennzeichnet,**
- **dass** eine Kommunikationseinrichtung zum Empfang zumindest von Steuerungssignalen eingerichtet ist und/oder dass die Kommunikationseinrichtung zum Versenden zumindest von durch den (GPS-) Positions-/Höhenmesser und/oder den Kompass erfassten Messwerten und/oder einer relativen Position der Markierungsvorrichtung zu der Referenzmarkierung eingerichtet ist.

8. System mit einer Markierungsvorrichtung nach einem der vorangehenden Ansprüche und einer mobilen Bilderfassungsvorrichtung,
**dadurch gekennzeichnet,**
- **dass** die Markierungsvorrichtung und die Bilderfassungsvorrichtung zur drahtlosen Kommunikation miteinander gebildet sind, wobei die Bilderfassungsvorrichtung insbesondere eine Kamera, insbesondere eine geeichte Messkamera ist.

9. System nach Anspruch 7 oder 8,
**dadurch gekennzeichnet,**
- **dass** die Bilderfassungsvorrichtung zum Empfang zumindest von durch den Positions-/Höhenmesser und/oder den Kompass erfassten Messwerten und/oder einer relativen Position der Markierungsvorrichtung zu der Referenzmarkierung eingerichtet ist.

10. Markierungsvorrichtung nach einem der vorangehenden Ansprüche,
**dadurch gekennzeichnet,**
- **dass** die Aufbringungsmittel zum Aufbringen einer Referenzskala auf dem Tragwerk eingerichtet sind und/oder
- **dass** die Bilderfassungsvorrichtung zumindest die Referenzskale erfasst so dass zumindest abhängig von der Referenzskale und den erfassten Referenzobjekten quantitative Maße des Tragwerks bestimmbar sind, und/oder
- **dass** die Bilderfassungsvorrichtung zumindest zwei Bilder der Referenzobjekte auf dem Tragwerk erfasst, so dass mittels Bündelausgleichung Objektkoordinaten der Referenzobjekte ermittelbar sind.

11. System nach einem der vorangehenden Ansprüche,
**dadurch gekennzeichnet,**
- **dass** die Bilderfassungsvorrichtung auf einer mobilen Drohne angeordnet ist und/oder dass die mobile Drohne zum Transport der Markierungsvorrichtung eingerichtet ist, und/oder
- **dass** die mobile Drohne abhängig von der Position der Markierungsvorrichtung auf dem Tragwerk ausrichtbar ist und dass die Bilderfassungsvorrichtung abhängig von der Position der Markierungsvorrichtung auf dem Tragwerk Bilder erfasst.

12. Bauwerk, mit
- einem sich in einer Längsachse erstreckenden, rohförmigen Tragelement, bei dem an einem stirnseitigen Ende ein Anschlussflansch für eine kraft- und/oder formschlüssige Verbindung mit einem an dem Tragwerk zu befestigenden Bauelement,
**dadurch gekennzeichnet,**
- **dass** auf den Anschlussflansch nach der Montage des Tragelements photogrammetrisch erfassbare Referenzobjekte aufgebracht sind.

13. Bauwerk nach Anspruch 12,
**dadurch gekennzeichnet,**
- **dass** zumindest zwei Referenzobjekte, vorzugsweise drei Referenzobjekte in gleichen Winkelabständen zueinander auf dem Flansch aufgebracht sind, und/oder
- **dass** die Referenzobjekte Reflektoren sind und/oder dass die Referenzobjekte haftend rückstandsfrei entfernbar auf dem Anschlussflansch angeordnet sind.

14. Bauwerk nach einem der vorangehenden Ansprüche,
**dadurch gekennzeichnet,**
- **dass** auf dem Anschlussflansch zumindest eine Referenzmarkierung für eine Markierungsvorrichtung nach Anspruch 1 angeordnet ist.

15. Bauwerk nach einem der vorangehenden Ansprüche,
**dadurch gekennzeichnet,**
- **dass** es eine Gründungsstruktur für On- oder Offshore Anlagen, insbesondere Windkraftanlagen, ist und insbesondere dass das Bauelement ein Übergangsstück der Windkraftanlage ist.
